(19) Europäisches Patentamt
European Patent Office
Office européen des brevets

(11) **EP 4 478 448 A1**

(12) **EUROPEAN PATENT APPLICATION**

(43) Date of publication:
**18.12.2024 Bulletin 2024/51**

(21) Application number: **24179512.9**

(22) Date of filing: **03.06.2024**

(51) International Patent Classification (IPC):
**H01M 4/133** (2010.01)   **H01M 4/1393** (2010.01)
**H01M 4/02** (2006.01)

(52) Cooperative Patent Classification (CPC):
**H01M 4/133; H01M 4/1393;** H01M 2004/027;
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.06.2023   CN 202310702058**

(71) Applicant: **CALB Group Co., Ltd.
Changzhou City, Jiangsu Province (CN)**

(72) Inventors:
• **GUO, Dexiang
  Changzhou City, Jiangsu Province (CN)**
• **SHEN, Taotao
  Changzhou City, Jiangsu Province (CN)**
• **QIAO, Zhi
  Changzhou City, Jiangsu Province (CN)**
• **SHAN, Xuyi
  Luoyang City, Henan Province (CN)**

(74) Representative: **Becker, Eberhard
  Becker Kurig & Partner
  Patentanwälte mbB
  Bavariastraße 7
  80336 München (DE)**

(54) **NEGATIVE PLATE, SECONDARY BATTERY AND ELECTRICAL DEVICE**

(57)   The present disclosure discloses a negative plate, a secondary battery and an electrical device, and falls within the technical field of batteries. The negative plate of the present disclosure includes a negative current collector and an anode active material layer provided on a surface of the negative current collector, the anode active material layer includes an anode active material, the anode active material includes graphite, and the negative plate satisfies the following relationship: $a=\ln(D_{FW})+10\times\ln(D_V 50)+1/3(La)+26.5$, $b=PD$, $a/45-b \geq 0.05$. By reasonably controlling a particle diameter distribution of the anode active material in the negative plate, as well as a crystal size and a compacted density of the negative plate, the negative plate of the present disclosure maintains good wettability at a higher compacted density and has good liquid absorption capacity for an electrolyte solution, and a battery containing the negative plate has excellent cycle life.

EP 4 478 448 A1

Processed by Luminess, 75001 PARIS (FR)

**Description**

**TECHNICAL FIELD**

The present disclosure relates to the technical field of batteries, and more particularly, to a negative plate, a secondary battery and an electrical device.

**BACKGROUND**

In recent years, with the continuous development and popularization of electric vehicles, the requirements for the battery performance of electric vehicles are becoming higher and higher, and especially the current endurance mileage issues are receiving more and more attention. Battery is the core component of electric vehicles, and energy density of battery is one of the key factors to determine the endurance mileages of electric vehicles, so that improving the energy density of battery is very critical.

As reported in the prior art, the energy density of battery can be increased by increasing a compacted density of the plates. However, the increase in the compacted density of the plates also causes other problems, such as a decrease in the low-temperature liquid absorption capacity (wettability) of the plates, which also decreases the cycle life of the battery.

Accordingly, it would be desirable to provide a plate having both high compacted density and good wettability.

**SUMMARY**

An object of the present disclosure is to overcome the disadvantages of the prior art and provide a negative plate, a secondary battery, and an electrical device, wherein the negative plate has a higher compacted density, maintains a good low-temperature wettability, and has a good liquid absorption capacity for an electrolyte solution at a low temperature, and a battery including the negative plate has an excellent cycle life.

To achieve the above-mentioned object, in a first aspect of the present disclosure, the present disclosure provides a negative plate, including a negative current collector and an anode active material layer provided on at least one surface of the negative current collector, the anode active material layer including an anode active material, wherein the anode active material includes graphite, and the negative plate satisfies the following relationship:

$$a = \ln(D_{FW}) + 10 \times \ln(D_V 50) + 1/3(La) + 26.5, \quad b = PD, \quad a/45 - b \geq 0.05,$$

where $D_{FW}$ is a full width at half maximum of a particle size volume distribution of the anode active material in a unit of $\mu$m,

Dv50 is a particle diameter corresponding to 50% of a cumulative volume distribution percentage of the anode active material in a unit of $\mu$m,

La is an average size of a crystal in an a-axis direction measured by Raman spectroscopy on the negative plate in a unit of nm, and

PD is a compacted density of the negative plate in a unit of g/cm³.

As a preferred implementation of the present disclosure, the negative plate satisfies the following relationship: $0.06 \leq a/45 - b \leq 0.15$.

As a preferred implementation of the present disclosure, the $D_{FW}$ is in a range of 10 $\mu$m to 35 $\mu$m.

As a further preferred implementation of the present disclosure, the $D_{FW}$ is in a range of 15 $\mu$m to 30 $\mu$m.

As a preferred implementation of the present disclosure, the Dv50 is in a range of 5 $\mu$m to 20 $\mu$m.

As a further preferred implementation of the present disclosure, the Dv50 is in a range of 8 $\mu$m to 15 $\mu$m.

As a preferred implementation of the present disclosure, the La is in a range of 50nm to 80 nm.

As a further preferred implementation of the present disclosure, the La is in a range of 65 nm to 75 nm.

As a preferred implementation of the present disclosure, the PD is in a range of 1.3 g/cm³ to 1.8 g/cm³.

As a further preferred implementation of the present disclosure, the PD is in a range of 1.60 g/cm³ to 1.75 g/cm³.

As a preferred implementation of the present disclosure, the negative plate further satisfies the following relationship:

$$9.5 \leq 5.5 \times b - \ln(c) \leq 11.5,$$

where c is an ion transport impedance of the negative plate in a unit of ohms (Q).

As a preferred implementation of the present disclosure, the c is in a range of 0.05Q to 2 Q.

In a second aspect of the present disclosure, the present disclosure provides a secondary battery, including a positive plate, a negative plate and an electrolyte solution, wherein the negative plate is the negative plate described above.

In a third aspect of the present disclosure, the present disclosure provides an electrical device including the secondary battery described above.

Advantageous effects of the present disclosure are as follows:

The present disclosure has developed a negative plate, a secondary battery including the same and an electrical device. By reasonably controlling a particle diameter distribution of the anode active material in the negative plate, as well as a crystal size and a compacted density of the negative plate, the negative plate of the present disclosure maintains good low-temperature wettability at a higher compacted density and has good liquid absorption capacity for an electrolyte solution at a low temperature, and a battery containing the negative plate has excellent cycle life.

## DETAILED DESCRIPTION

In order to make the purpose, technical solutions, and advantages of the embodiments of the present disclosure clearer, the technical solutions in the embodiments of the present disclosure will be described clearly and completely below. Obviously, the described embodiments are a part, not all, of the embodiments of the present disclosure. Based on the embodiments of the present disclosure, all other embodiments obtained by a person skilled in the art without involving any inventive effort fall within the scope of protection of the present disclosure.

In the present disclosure, among the technical features which are described in an open manner, a closed technical solution consisting of the recited features also includes an open technical solution containing the recited features.

In the present disclosure, reference is made to numerical ranges which are, unless otherwise indicated, to be considered continuous and to include both the minimum and maximum values of the range, and every value between the minimum and maximum values. Further, when a range refers to an integer, every integer between the minimum and maximum values of the range is included. Further, when multiple ranges are provided to describe a feature or characteristic, the ranges can be combined. In other words, unless otherwise indicated, all ranges disclosed herein are to be understood to include any and all subranges subsumed therein.

In the present disclosure, the specific dispersion and stirring treatment methods are not particularly limited. The reagents or instruments used in the present disclosure, without indicating the manufacturer, are conventional products commercially available.

Negative plate

An embodiment of the present disclosure provides a negative plate, including a negative current collector and an anode active material layer provided on at least one surface of the negative current collector, the anode active material layer including an anode active material, wherein the anode active material includes graphite the negative plate satisfies the following relationship:

$$a=\ln(D_{FW})+10\times\ln(D_V 50)+1/3(La)+26.5, \quad b=PD, \quad a/45-b\geq0.05;$$

where $D_{FW}$ is a full width at half maximum of a particle size volume distribution of the anode active material in a unit of $\mu m$,

Dv50 is a particle diameter corresponding to 50% of a cumulative volume distribution percentage of the anode active material in a unit of $\mu m$,

La is an average size of a crystal in an a-axis direction measured by Raman spectroscopy on the negative plate in a unit of nm, and

PD is a compacted density of the negative plate in a unit of $g/cm^3$.

$D_{FW}$ and $D_V 50$ represent a particle diameter distribution of the anode active material in the negative plate, and La represents an average size of a crystal in an a-axis direction (referred to as transverse crystal size) on a microscopic scale of the negative plate. In the present disclosure, $a=\ln(D_{FW})+10\times\ln(D_V 50)+1/3(La)+26.5$, that is, a size of the value of a is related to the combination of $D_{FW}$, $D_V 50$ and La, so that morphology features of the negative plate on both the macro-and micro-scale can be combined. When $a/45-b\geq0.05$, the morphology feature and compacted density of the negative plate are in a suitable range, which is not only conducive to lithium ions entering a graphite layer through defects and can freely lead to intercalation and deintercalation of lithium ions, but also is conducive to the wetting of the electrolyte solution and the anode active material, and a thickness of the SEI film generated by the reaction is controlled in a certain range, so that the negative plate has excellent liquid absorption capacity for the electrolyte solution at a low temperature and has good wettability, and the battery containing the negative plate has a high cycle life.

In one of the implementations, the negative plate satisfies the following relationship: $0.06 \leq a/45\text{-}b \leq 0.15$.

In one of the more preferred implementations, the negative plate satisfies the following relationship: $0.08 \leq a/45\text{-}b \leq 0.12$.

With the increase of a/45-b, the low-temperature wettability of negative plate is better. However, the value of a/45-b should not be too high, which may cause a decrease in an energy density of the battery or impair a charge/discharge rate of the battery.

In the present disclosure, $D_{FW}$ is a full width at half maximum of a particle size volume distribution of the anode active material, that is, the difference between the two particle diameter values corresponding to a half of a maximum height of an interval particle diameter distribution curve of the anode active material. The interval particle diameter distribution (also referred to as differential distribution of the particle diameter) curve of the anode active material is a well-known meaning in the art, and is defined as a curve drawn with the particle diameter as an abscissa and a volume percentage content as an ordinate, which can more accurately reflect a particle diameter distribution characteristics of anode active material particles.

Dv50 is a particle diameter corresponding to 50% of a cumulative volume distribution percentage of the anode active material. With regard to the method for detecting $D_{FW}$ and Dv50, the present disclosure is not limited, and a person skilled in the art would have been able to detect $D_{FW}$ and Dv50 of the anode active material according to conventional technical means, and, by way of example, a laser particle size analyzer, such as a Master sizer 3000 laser particle size analyzer of Malvern Panalytical Ltd. (UK) could be adopted.

A particle diameter control of the anode active material (including a regulation of $D_{FW}$ and $D_V50$) generally uses a grading screening method, and a specific grading screening method is not particularly limited and can be selected according to actual situations. Sieve grading screening is typically used. The anode active material is thrown into sieves with different mesh grades fo screening. Since the particle diameters of the particles are different, the particles with a small particle diameter will be screened out by the sieves, and the desired particle diameters can be retained on the sieves, and thereby the anode active material with different particle diameter grades can be obtained. Active substances of certain particle diameter dimensions can be formulated according to actual needs so that their particle diameter distribution can be adjusted manually.

In one of the implementations, the $D_{FW}$ is in a range of 10 $\mu$m to 35 $\mu$m, and is for example, 12 $\mu$m, 15 $\mu$m, 18 $\mu$m, 20 $\mu$m, 25 $\mu$m, 30 $\mu$m, 33 $\mu$m.

In one of the preferred implementations, the $D_{FW}$ is in a range of 15 $\mu$m to 30 $\mu$m.

In one of the implementations, the Dv50 is in a range of 5 $\mu$m to 20 $\mu$m, and is for example, 7 $\mu$m, 8 $\mu$m, 10 $\mu$m, 11 $\mu$m, 13 $\mu$m, 15 $\mu$m, 18 $\mu$m.

In one of the preferred implementations, the Dv50 is in a range of 8 $\mu$m to 15 $\mu$m.

When the $D_{FW}$ is within the above-mentioned preferred range of the present disclosure, the anode active material has a relatively wide range of particle diameter distribution and particles of a large size and particles of a small size are mixed, so as to achieve an increase in the compacted density of the negative electrode plate without decreasing the low-temperature wettability of the negative plate. When the Dv50 of the anode active material is larger, the negative plate can obtain a higher compacted density, which contributes to the improvement of electrochemical performance of the battery. However, the Dv50 should not be so large as to cause uneven distribution of the anode active material layer or decrease the cycle life of the battery.

In the present disclosure, the La value of the negative plate is measured by Raman spectroscopy and calculated by the following formula: $La=2.4 \times 10^{-10} \times \lambda^4 \times (A_D/A_G)^{-1}$, where $\lambda$ is a wavelength of an incident light in the Raman spectrum, $A_D$ is a peak area of a D peak (located in a waveband region of 1320 cm$^{-1}$ to 1380 cm$^{-1}$) in the Raman spectrum and $A_G$ is a peak area of a G peak (located in a waveband region of 1560 cm$^{-1}$ to 1600 cm$^{-1}$) in the Raman spectrum.

The La of the negative plate is the La in a state where the anode active material is contained in an anode active coating of the negative plate. As well known, the anode active coating is prepared by mixing raw materials including the anode active material, a binder, a conductive material, etc. with a solvent to prepare a slurry, coating the slurry on a current collector, and drying and rolling the same. The La of the anode active material will change during the preparation process, so it is necessary to clearly distinguish the physical properties of the anode active material in a raw material state and the anode active material in an anode active coating state. The two cannot be considered as equivalent. Once the anode active material is uniformly distributed and solidified onto the negative plate, its crystallite size is basically stable during the use of the battery. However, in order to regularly control initial grain defects of the negative active material, the negative active material may be graphite which have been subjected to thermal processing, namely, in particular, the graphite material is subjected to a thermal processing under inert conditions, i.e. in an atmosphere substantially free of oxygen, including but not limited to an atmosphere of an inert gas (e.g. nitrogen, argon, etc.). After thermal processing under inert conditions, the quantity of defects, dislocation slips or discontinuities in the graphite grains can be reduced, thereby adjusting the regularity of the graphite crystals. Conditions conventional in the art may be employed for thermal processing of the graphite material.

The above-mentioned thermal processing for graphite is not an essential step in the present disclosure, and the technical problem of the present disclosure can also be solved if the anode active material, satisfying the above-mentioned relationship range, in the anode active coating can be obtained by mass screening and after specific control of preparation conditions.

In one of the implementations, the La is in a range of 50 nm to 80 nm, and is such as 55 nm, 59 nm, 65 nm, 67 nm, 69 nm, 72 nm, 75 nm, 79 nm.

In one of the preferred implementations, the La is in a range of 65 nm to 75 nm.

When the La value of the negative plate is too small, a crystallinity of the anode active material is relatively low and a capacity is small, which limits the improvement of energy density of the lithium ion battery; when the La value of the negative plate is too large, a diffusion distance after lithium ions are intercalated into the anode active material layer is lengthened, resulting in an increase in diffusion resistance and easy lithium precipitation during high-rate charging and discharging, thereby reducing the cycle life of the battery.

In one of the implementations, the PD is in a range of $1.3 \text{ g/cm}^3$ to $1.8 \text{ g/cm}^3$, and is for example, $1.35 \text{ g/cm}^3$, $1.4 \text{ g/cm}^3$, $1.45 \text{ g/cm}^3$, $1.5 \text{ g/cm}^3$, $1.6 \text{ g/cm}^3$, $1.65 \text{ g/cm}^3$, $1.7 \text{ g/cm}^3$, $1.75 \text{g/cm}^3$.

In one of the preferred implementations, the PD is in a range of $1.60 \text{ g/cm}^3$ to $1.75 \text{ g/cm}^3$.

The compacted density of the negative plate represents the degree of compaction between substances in the anode active material layer. Generally, the compacted density is related to the energy density of the material, and at an excessively low compacted density, the energy density of the battery is low. Therefore, it is preferred in this patent that the PD of the negative plate is not less than $1.3 \text{ g/cm}^3$. Further, the inventors have found that when the PD is in a range of $1.60 \text{ g/cm}^3$ to $1.75 \text{ g/cm}^3$, and the negative plate has both a high compacted density and an excellent low-temperature wetting performance.

In one of the implementations, the negative plate further satisfies the relationship: $9.5 \leq 5.5 \times b - \ln(c) \leq 11.5$, where c is an ion transport impedance ($R_{ion}$) of the negative plate in a unit of ohms (Q).

The ion transport impedance $R_{ion}$ of the negative plate can be measured as follows: a symmetrical battery is prepared with two identical negative plates, the electrochemical impedance spectroscopy (EIS) of the symmetrical battery is acquired by using electrochemical workstation, and alternating current impedance spectra are obtained by EIS test. An impedance composition is analyzed by combining an equivalent circuit diagram and an impedance decomposition model, and the Nyquist diagram and the bode diagram are obtained. The Z-view or EC-Lab software is used for fitting, and a coincidence degree between a simulation diagram and a measured diagram is improved by adjusting the values of the various impedances. Calculation is performed according to the following formula to obtain $R_{ion}$: $Z'_{\omega \to 0} = R_{sol} - R_{ion}/3$, where $R_{sol}$ is an ohmic impedance, $Z'_{\omega \to 0}$ is a mixed impedance, the values of $R_{sol}$ and $Z'_{\omega \to 0}$ can be obtained according to the Nyquist diagram of EIS (refer to the detection method in this document: Ogihara N, Kawauchi S, Okuda C, et al. Theoretical and experimental analysis of porous electrodes for lithium-ion batteries by electrochemical impedance spectroscopy using a symmetric cell[J]. Journal of The Electrochemical Society, 2012, 159(7): A1034.).

When the ion transport impedance and the compacted density of the negative plate meet $9.5 \leq 5.5 \times b - \ln(c) \leq 11.5$, the ion transport impedance and the compacted density are in an appropriate range, and the battery has good electrochemical performance and excellent low-temperature wetting performance.

In one of the implementations, the c is in a range of 0.05Q to 2Q, and is for example, $0.1\Omega$, $0.15\Omega$, $0.2\Omega$, $0.3\Omega$, $0.4\Omega$, $0.5\Omega$, $0.6\Omega$, $0.8\Omega$, $1.0\Omega$, $1.5\Omega$, $1.8\Omega$.

In one of the preferred implementations, c is in the range of 0.1S2 to 1.0 Q.

The ion transport impedance reflects a transport rate of electrolyte ions in electrode channels. Generally speaking, when the ion transport impedance is low, the transport rate of electrolyte ions is relatively high, which helps the electrolyte solution to better wet the plate at a low temperature. The ion transport impedance of the negative plate is affected by various factors, such as a porosity, a pore structure of the anode active material layer, the morphology feature of the anode active material, etc. Although the wetting performance of the negative plate is better when the ion transport impedance is lower, the performance of the negative plate may be unstable to achieve a lower ion transport impedance, thereby causing a decrease in the cycle life of the battery.

The graphite in the anode active material according to the present disclosure may include natural graphite and/or artificial graphite.

The method for preparing the anode active material is not particularly limited in the present disclosure, and a person skilled in the art can prepare the anode active material by conventional means.

Illustratively, the method for preparing the anode active material may be as follows:

crushing and granulating a graphite raw material to obtain a granular product; subjecting the granular product to a graphitization treatment at a temperature of 2500 °C to 3500 °C for a time period of 5h to 8h, controlling a gradient temperature rise during the graphitization treatment, for example, heating at a rate of 5°C/min to 20 °C/min; then performing carbonization treatment at a temperature of 700 °C to -1500 °C for a time period of 4h to 8h to obtain an artificial graphite; and obtaining the anode active material through screening and grading;

the method for preparing the anode active material may also be as follows:

adopting natural graphite ore to obtain natural flake graphite through crushing, ball milling and flotation, and performing isostatic pressing after screening, acid washing treatment and spheronization treatment, wherein the conditions for the isostatic pressing are: a temperature of 100 °C to 300 °C and a pressure of 70 Mpa to 85 MPa and a time for 30 min to 180 min; after mixing the obtained product with a coating material, performing a carbonization treatment at a temperature of 700°C to 1300°C for a time period of 5h to 7h; and obtaining the anode active material through screening and grading;

therein, alternatively, the coating material may be a high-purity asphalt, and a mixing mass ratio of the isostatically pressed product to the coating material is (97-99):(1-3).

As for the negative plate, the present disclosure does not particularly limit the negative current collector as long as it has high conductivity without causing adverse chemical changes in the battery, and for example, copper, stainless steel, aluminum, nickel, titanium, carbon fired, copper or stainless steel surface-treated with one of carbon, nickel, titanium, silver, or the like, or an aluminum-cadmium alloy may be used.

The anode active material layer of the negative plate may further include a conductive agent, a binder, in addition to the anode active material.

The conductive agent functions to improve the electrical conductivity of the anode active material layer, and the present disclosure has no particular limitation on the conductive agent, for example, carbon powder such as carbon black, acetylene black, ketjen black, channel black, furnace black, lamp black or thermal black, graphite powder such as natural graphite or artificial graphite, conductive fiber such as carbon fiber or metal fiber; conductive whiskers such as zinc oxide whiskers or potassium titanate whiskers can be used.

The binder serves to enhance adhesion between the conductive agent, the anode active material, and the negative current collector. The binder is not particularly limited in the present disclosure, and for example, a polymer material such as a fluororesin-based binder, a rubber-based binder, a cellulose-based binder, a polyol-based binder, a polyolefin-based binder, a polyimide-based binder, a polyester-based binder, a silane-based binder, or the like may be used.

In addition, a thickener, which may use carboxymethyl cellulose, may be further included in the anode active material layer.

It should be noted that the method for preparing the negative plate is not particularly limited in the present disclosure, and a person skilled in the art would have been able to prepare the negative plate according to conventional methods.

Illustratively, the method for preparing the negative plate may be as follows:

coating an anode slurry, which may be prepared by dissolving or dispersing the anode active material and optionally the binder and the conductive agent in the solvent with the negative current collector, followed by rolling or drying; or performing the preparation by casting the anode slurry on a separate carrier and then laminating a membrane separated from the carrier on the negative current collector.

Secondary battery

An embodiment of the present disclosure provides a secondary battery, including a positive plate, a negative plate and an electrolyte solution, wherein the negative plate is the negative plate described above.

The positive plate of the present disclosure includes a positive current collector and a cathode active material layer provided on at least one surface of the positive current collector, wherein the cathode active material layer includes a cathode active material, and may further includes a conductive agent and/or a binder.

The present disclosure does not particularly limit the positive current collector as long as it has high conductivity without causing adverse chemical changes in the battery, and for example, copper, stainless steel, aluminum, nickel, titanium, carbon fired, copper or stainless steel surface-treated with one of carbon, nickel, titanium, silver, or the like, or an aluminum-cadmium alloy may be used. The positive current collector may be the same as or different from the negative current collector of the present disclosure.

The cathode active material is a compound capable of being reversibly intercalated and deintercalated with lithium, and for example, the cathode active material may include a lithium composite metal oxide including lithium and at least one metal selected from the group consisting of nickel (Ni), cobalt (Co), manganese (Mn), iron (Fe), and aluminum (Al). Specifically, the cathode active material may include at least one of $Li(Ni_{0.6}Mn_{0.2}Co_{0.2})O_2$, $Li(Ni_{0.7}Mn_{0.2}C_{0.10})O_2$,

$Li(Ni_{0.8}Mn_{0.1}Co_{0.1})O_2$, $Li(Ni_{0.8}Co_{0.15}Al_{0.05})O_2$, $Li(Ni_{0.86}Mn_{0.07}Co_{0.05}Al_{0.02})O_2$, $Li(Ni_{0.9}Mn_{0.05}Co_{0.05})O_2$. The conductive agent functions to improve the electrical conductivity of the cathode active material layer, and the present disclosure does not particularly limit the conductive agent. The conductive agent in the positive plate may be the same as or different from the conductive agent in the negative plate of the present disclosure.

The binder serves to enhance adhesion between the conductive agent, the cathode active material, and the positive current collector, and the present disclosure does not particularly limit the binder. The binder in the positive plate may be the same as or different from the binder in the negative plate of the present disclosure.

It should be noted that the method for preparing the positive plate is not particularly limited in the present disclosure, and a person skilled in the art would have been able to prepare the positive plate according to conventional methods.

Illustratively, the method for preparing the positive plate may be as follows:

coating a cathode slurry, which may be prepared by dissolving or dispersing the cathode active material and optionally the binder and the conductive agent in the solvent with the positive current collector, followed by rolling or drying; or performing the preparation by casting the cathode slurry on a separate carrier and then laminating a membrane separated from the carrier on the positive current collector.

The electrolyte solution of the present disclosure may be any electrolyte solution suitable in the art for use in electrochemical energy storage devices. The electrolyte solution includes an electrolyte and a solvent, and the electrolyte may generally include a lithium salt, and more specifically, the lithium salt may be an inorganic lithium salt and/or an organic lithium salt. The solvent in the electrolyte solution is generally a non-aqueous solvent, and specifically, the solvent includes at least one of ethylene carbonate, propylene carbonate, butylene carbonate, pentylene carbonate, dimethyl carbonate, diethyl carbonate, dipropyl carbonate, methyl ethyl carbonate, or a halogenated derivatives thereof.

The secondary battery may further include a separator disposed between the positive plate and the negative plate for spacing the positive plate and the negative plate and preventing the positive plate and the negative plate from contacting and short-circuiting. The separator can be any of a variety of materials known in the art suitable for use as a spacing separator for electrochemical energy storage devices. Specifically, the separator includes at least one of polyethylene, polypropylene, polyvinylidene fluoride, aramid, polyethylene terephthalate, polytetrafluoro ethylene, polyacrylonitrile, polyimide, polyamide, polyester, and natural fiber.

Electrical device

One implementation of the present disclosure provides an electrical device including the secondary battery described above. The secondary battery serves as a power supply for the electrical device.

The electrical device refers to any device that can use electrical energy and convert same into one or more forms of energy such as mechanical energy, thermal energy, light energy, etc., for example, an electric motor, an electric heat engine, an electric light source, etc. Specifically, it can include but is not limited to mobile devices, electric vehicles, electric trains, ships and satellites, energy storage systems, etc., mobile devices can include mobile phones, laptops, UAVs, sweeping robots, e-cigarettes, etc; electric vehicles can include pure electric vehicles, hybrid electric vehicles, plug-in hybrid electric vehicles, electric bicycles, electric scooters, electric golf carts, electric trucks, etc.

The disclosure is further illustrated in combination with the following specific examples.

In particular embodiments of the present disclosure, the method for detecting Dv50 and $D_{FW}$ of the anode active material is as follows:
performing measurements using a laser particle size test method using a Malvern particle size tester according to the following steps: dispersing the anode active material to be tested in deionized water containing a dispersant (such as nonylphenol polyoxyethylene ether with a content of 0.03wt%) to form a mixture, sonicating the mixture for 2 minutes, and then placing same into a particle size tester for testing; obtaining the $D_{FW}$ from a difference between the two particle diameter values corresponding to a half of the maximum height of the interval particle diameter distribution curve of the active material, and obtaining the $D_V50$ from the particle diameter corresponding to 50% of the cumulative volume distribution percentage of the anode active material.

In particular embodiments of the present disclosure, the method for detecting La of the negative plate is as follows:
obtaining the La of the negative plate through test analysis by Thermo Fisher Raman spectrometer, and calculating the La by the following formula: $La = 2.4 \times 10^{-10} \times \lambda^4 \times (A_D/A_G)^{-1}$, wherein $\lambda$ is a wavelength of an incident laser light of Raman spectrum, $A_D$ is a peak area of D peak (located in a waveband region of 1320 $cm^{-1}$ to 1380$cm^{-1}$) in Raman spectrum and $A_G$ is a peak area of G peak (located in a waveband region of 1560 $cm^{-1}$ to 1600$cm^{-1}$) in Raman spectrum; and the Raman spectroscopy analysis conditions are as follows: using a laser light with a wavelength of 785 nm and a spot of less than 1 $\mu m^2$ at room temperature and under normal atmospheric pressure.

In particular embodiments of the present disclosure, the method for detecting PD of the negative plate is as follows:

compacted density of the negative plate PD=m/V, where, in the formula, m is the mass of anode active material layer in a unit of g, and m can be weighed using an electronic balance with an accuracy of 0.01g or more; V is a volume of the anode active material layer in a unit of $cm^3$, wherein the volume V is the product of the area Ar of the anode active material layer and the thickness of the anode active material layer, and the thickness can be measured using a spiral micrometer with an accuracy of 0.5 $\mu$m.

In particular embodiments of the present disclosure, the method for detecting $R_{ion}$ of the negative plate is as follows:

preparing a symmetrical battery by using two identical negative plates, measuring the alternating current impedance of the symmetrical battery using an electrochemical workstation, and collecting an electrochemical impedance spectroscopy (EIS) of the symmetrical battery, wherein the specific test conditions are as follows: sinusoidal alternating current voltage excitation with an amplitude of 5 mV and a frequency range of 0.1Hz to $10^6$ Hz; obtaining the Nyquist diagram and bode diagrambased on the equivalent circuit diagram and impedance decomposition model, and then fitting by Z-view or EC-Lab software, then improving the coincidence degree between the simulated diagram and the measured diagram by adjusting the values of the various impedances to obtain the ion transport impedance $R_{ion}$ of ions in the plate. In particular embodiments of the present disclosure, the method for detecting a contact angle is as follows:

with ethylene carbonate and methyl ethyl carbonate (weight ratio is 1:1) as a solvent, detecting the contact angle of the negative plate using a contact angle tester JC2000 D2M manufactured by Shanghai Zhongchen Digital Technology Equipment Co. Ltd.(powereach), wherein the specific detection conditions are as follows: keeping the negative plate in an environment of -10°C for 30 minutes, then dropping the solvent drop by drop at different positions on the surface of the negative plate (one drop at each position), using a contact angle tester to observe the moment when the drop completely contacts the plate, calculating the contact angle at this moment, and taking an average value according to the test results at different positions, namely, the contact angle of the negative plate.

In particular embodiments of the present disclosure, the method for detecting a compacted state is as follows: observing the surface of the negative plate after the rolling treatment, wherein: if there is no abnormality on the surface after rolling, there is good surface; if, within 5 cm of an edge of the negative plate, there are one or more stripes or spots with a darker color, and there is no abnormality in other areas, there is an edge overpressure; and if, in addition to the edge of the negative plate, there are one or more stripes or spots with a darker color in a middle area, there is a severe overpressure.

In particular embodiments of the present disclosure, the method for detecting the cycle life is as follows: using a battery charge/discharge tester to make charge/discharge cycle test on the lithium ion battery at 25°C, and the charge/discharge system is as follows: charging the battery with 1 C of constant current to 4.25V, then charging the battery with constant voltage until the current drops to 0.02 C, after standing for 5min, discharging the battery with 1C of constant current to 2.5V, which is 1 cycle; as the battery cycles, the battery capacity decays, and the quantity of cycles experienced when the capacity decays to 80% of a first discharge capacity is recorded as the cycle life of the battery.

Embodiment 1

This embodiment provides a lithium ion battery, and the specific preparation method is as follows:

(1) Preparation of the negative plate:

(1.1) A mechanical mill or a roller mill is used to crush the raw material non-needle-shaped raw petroleum coke, and grading is performed after crushing so as to regulate the particle diameter distribution of the obtained particle product; after shaping the granular product obtained after crushing, the granular product obtained is added into a reaction kettle of a granulator, and granulation treatment is performed without adding a binder; the product obtained by granulation is added into a graphitization furnace and graphitization treatment is performed under the conditions that: the temperature is maintained at 2800 °C for 3h and then increased to 3300 °C at 15 °C/min for 3h; then a carbonization treatment is performed at a temperature of 1020 °C for a time period of 8h, and pressure is not additionally applied in the carbonization treatment, thereby obtaining an artificial graphite; then the artificial graphite is screened and graded by a grading sieve to obtain the anode active material with a Dv50 of 12 $\mu$m and a $D_{FW}$ of 25.1 $\mu$m;

(1.2) the anode active material, the conductive agent (carbon black), the thickener (carboxymethyl cellulose, CMC) and the binder (styrene-butadiene rubber, SBR) are mixed in a mass ratio of 95:1.5:1.5:2.0, a vacuum stirrer is used to prepare the anode slurry in a wet process, the anode slurry is uniformly coated on the negative current collector (copper foil), the negative current collector coated with the anode slurry is transferred to an oven for drying, then rolling and slitting are performed, and the rolling conditions are controlled to obtain the negative plate having a PD of 1.68 g/cm$^3$.

(2) Preparation of the positive plate

the cathode active material Li(Ni$_{0.7}$Mn$_{0.2}$Co$_{0.1}$)O$_2$, the binder (polyvinylidene fluoride) and the conductive agent (carbon black) are mixed in a mass ratio of 95:2.5:2.5, N-methylpyrrolidone (NMP) is added, and stirring is performed under the action of a vacuum stirrer until the mixed system forms the cathode slurry with uniform fluidity; the cathode slurry is uniformly coated on the positive current collector (aluminum foil); the positive current collector coated with the cathode slurry is transferred to an oven for drying, and then subjected to rolling and slitting to obtain the positive plate.

(3) Preparation of the electrolyte solution

Ethylene carbonate (EC) and ethyl methyl carbonate (EMC) are mixed in a ratio of 1:1 by weight to obtain an organic solvent, and then sufficiently dried lithium salt LiPF$_6$ is dissolved in the mixed organic solvent to prepare the electrolyte solution with a concentration of 1 mol/L.

(4) Preparation of separator

A polyethylene (PE) separator coated with ceramic and polyvinylidene fluoride is used.

(5) Preparation of the battery

The prepared positive plate, separator and negative plate are wound to obtain a bare cell without liquid injection; the bare cell is paced in an outer packaging foil, the above-mentioned prepared electrolyte solution is injected into the dried bare cell, and the lithium ion battery is obtained through vacuum packaging, standing, formation, shaping, sorting and other processes.

Embodiment 2

Embodiment 2 provides a lithium ion battery, the method for preparing which is substantially the same as that of Embodiment 1, except that:

in preparing the negative plate, the conditions for the graphitization treatment are as follows: the temperature is maintained at 2790 °C for 2h, and then the temperature is increased to 2900 °C by 10 °C/min and maintained for 4h; and for the carbonization treatment, the temperature is 1000°C and the time period is 6h;
the artificial graphite is screened and graded so that the Dv50 and D$_{FW}$ of the anode active material satisfy table 1; and the rolling conditions are adjusted so that the PD of the negative plate satisfies Table 1.

Embodiment 3

Embodiment 3 provides a lithium ion battery, the method for preparing which is substantially the same as that of Embodiment 1, except that:

in preparing the negative plate, the conditions for the graphitization treatment are as follows: the temperature is maintained at 2815 °C for 3h, and then the temperature is increased to 2950 °C by 13 °C/min and maintained for 3h; and for the carbonization treatment, the temperature is 830 °C and the time period is 4.5h;
the artificial graphite is screened and graded so that the Dv50 and D$_{FW}$ of the anode active material satisfy table 1; and the rolling conditions are adjusted so that the PD of the negative plate satisfies Table 1.

Embodiment 4

Embodiment 4 provides a lithium ion battery, the method for preparing which is substantially the same as that of Embodiment 1, except that:

in preparing the negative plate, the conditions for the graphitization treatment are as follows: the temperature is maintained at 3025 °C for 4h, and then the temperature is increased to 3200 °C by 10 °C/min and maintained for 2h; and for the carbonization treatment, the temperature is 850 °C and the time period is 4h;
the artificial graphite is screened and graded so that the Dv50 and D$_{FW}$ of the anode active material satisfy table 1; and the rolling conditions are adjusted so that the PD of the negative plate satisfies Table 1.

Embodiment 5

Embodiment 5 provides a lithium ion battery, the method for preparing which is substantially the same as that of Embodiment 1, except that:

in preparing the negative plate, the conditions for the graphitization treatment are as follows: the temperature is maintained at 3000 °C for 3h, and then the temperature is increased to 3150 °C by 15 °C/min and maintained for 3.5h; and for the carbonization treatment, the temperature is 800°C and the time period is 7.5h;
the artificial graphite is screened and graded so that the Dv50 and $D_{FW}$ of the anode active material satisfy table 1; and the rolling conditions are adjusted so that the PD of the negative plate satisfies Table 1.

Embodiment 6

Embodiment 6 provides a lithium ion battery, the method for preparing which is substantially the same as that of Embodiment 1, except that:

in preparing the negative plate, the conditions for the graphitization treatment are as follows: the temperature is maintained at 2830 °C for 2.5h, and then the temperature is increased to 3000 °C by 20 °C/min and maintained for 3.5h; and for the carbonization treatment, the temperature is 1000 °C and the time period is 7.5h;
the artificial graphite is screened and graded so that the Dv50 and $D_{FW}$ of the anode active material satisfy table 1; and the rolling conditions are adjusted so that the PD of the negative plate satisfies Table 1.

Embodiment 7

Embodiment 7 provides a lithium ion battery, the method for preparing which is substantially the same as that of Embodiment 1, except that:

in preparing the negative plate, the conditions for the graphitization treatment are as follows: the temperature is maintained at 2850 °C for 3.5h, and then the temperature is increased to 2900 °C by 10 °C/min and maintained for 3h; and for the carbonization treatment, the temperature is 1310 °C and the time period is 4h;
the artificial graphite is screened and graded so that the Dv50 and $D_{FW}$ of the anode active material satisfy table 1; and the rolling conditions are adjusted so that the PD of the negative plate satisfies Table 1.

Embodiment 8

Embodiment 8 provides a lithium ion battery, the method for preparing which is substantially the same as that of Embodiment 1, except that:

in preparing the negative plate, the anode active material is prepared by the following method that: natural graphite ore is used to obtain natural flake graphite through a crushing-ball milling-flotation step, and after screening, acid washing treatment and spheronization treatment, isostatic pressing treatment is carried out, and the conditions for the isostatic pressing treatment are as follows: a temperature of 170 °C, a pressure of 80 MPa, and a time period of 60 min; the product after isostatic pressing is mixed with high-purity asphalt according to a mass ratio of 98:2, and the mixture is subjected to the carbonization treatment, wherein for the carbonization treatment, the temperature is 780 °C and the time period is 6.5h; then screening and grading are performed to obtain Dv50 and $D_{FW}$ that satisfy the anode active material described in table 1;
the rolling conditions are adjusted so that the PD of the negative plate satisfies Table 1.

Embodiment 9

Embodiment 9 provides a lithium ion battery, the method for preparing which is substantially the same as that of Embodiment 1, except that:

in preparing the negative plate, the conditions for the graphitization treatment are as follows: the temperature is maintained at 2610 °C for 3h, and then the temperature is increased to 2900 °C by 15°C/min and maintained for 3h; and for the carbonization treatment, the temperature is 1350 °C and the time period is 4h;
the artificial graphite is screened and graded so that the Dv50 and $D_{FW}$ of the anode active material satisfy table 1; and the rolling conditions are adjusted so that the PD of the negative plate satisfies Table 1.

Embodiment 10

Embodiment 10 provides a lithium ion battery, the method for preparing which is substantially the same as that of Embodiment 1, except that:

in preparing the negative plate, the anode active material is prepared by the following method that: natural graphite ore is used to obtain natural flake graphite through a crushing-ball milling-flotation step, and after screening, acid washing treatment and spheronization treatment, isostatic pressing treatment is carried out, and the conditions for the isostatic pressing treatment are as follows: a temperature of 200 °C, a pressure of 75 MPa, and a time period of 90 min; the product after isostatic pressing is mixed with high-purity asphalt according to a mass ratio of 99:1, and the mixture is subjected to the carbonization treatment, wherein for the carbonization treatment, the temperature is 1280°C and the time period is 6h; then screening and grading are performed to obtain Dv50 and $D_{FW}$ that satisfy the anode active material described in table 1;
the rolling conditions are adjusted so that the PD of the negative plate satisfies Table 1.

Embodiment 11

Embodiment 11 provides a lithium ion battery, the method for preparing which is substantially the same as that of Embodiment 1, except that:

in preparing the negative plate, the conditions for the graphitization treatment are as follows: the temperature is maintained at 2600 °C for 4h, and then the temperature is increased to 2750 °C by 15°C/min and maintained for 2h; and for the carbonization treatment, the temperature is 840 °C and the time period is 4h;
the artificial graphite is screened and graded so that the Dv50 and $D_{FW}$ of the anode active material satisfy table 1; and the rolling conditions are adjusted so that the PD of the negative plate satisfies Table 1.

Embodiment 12

Embodiment 12 provides a lithium ion battery, the method for preparing which is substantially the same as that of Embodiment 1, except that:

in preparing the negative plate, the conditions for the graphitization treatment are as follows: the temperature is maintained at 3000 °C for 3h, and then the temperature is increased to 3100 °C by 10°C/min and maintained for 3h; and for the carbonization treatment, the temperature is 830 °C and the time period is 8h;
the artificial graphite is screened and graded so that the Dv50 and $D_{FW}$ of the anode active material satisfy table 1; and the rolling conditions are adjusted so that the PD of the negative plate satisfies Table 1.

Embodiment 13

Embodiment 13 provides a lithium ion battery, the method for preparing which is substantially the same as that of Embodiment 1, except that:

in preparing the negative plate, the conditions for the graphitization treatment are as follows: the temperature is maintained at 3200 °C for 3.5h, and then the temperature is increased to 3280 °C by 8 °C/min and maintained for 2.5h; and for the carbonization treatment, the temperature is 1010 °C and the time period is 4h;
the artificial graphite is screened and graded so that the Dv50 and $D_{FW}$ of the anode active material satisfy table 1; and the rolling conditions are adjusted so that the PD of the negative plate satisfies Table 1.

Embodiment 14

Embodiment 14 provides a lithium ion battery, the method for preparing which is substantially the same as that of Embodiment 1, except that:

in preparing the negative plate, the conditions for the graphitization treatment are as follows: the temperature is maintained at 3100 °C for 3h, and then the temperature is increased to 3260 °C by 8 °C/min and maintained for 3h; and for the carbonization treatment, the temperature is 1070 °C and the time period is 7.5h; the artificial graphite is screened and graded so that the Dv50 and $D_{FW}$ of the anode active material satisfy table 1; and
the rolling conditions are adjusted so that the PD of the negative plate satisfies Table 1.

Embodiment 15

Embodiment 15 provides a lithium ion battery, the method for preparing which is substantially the same as that of Embodiment 1, except that:

in preparing the negative plate, the conditions for the graphitization treatment are as follows: the temperature is maintained at 3050 °C for 3h, and then the temperature is increased to 3200 °C by 10 °C/min and maintained for 3h; and for the carbonization treatment, the temperature is 1250 °C and the time period is 6h; the artificial graphite is screened and graded so that the Dv50 and $D_{FW}$ of the anode active material satisfy table 1; and the rolling conditions are adjusted so that the PD of the negative plate satisfies Table 1.

Comparative Example 1

Comparative Example 1 provides a lithium ion battery, the method for preparing which is substantially the same as that of Embodiment 1, except that:

in preparing the negative plate, the conditions for the graphitization treatment are as follows: the temperature is maintained at 2800 °C for 3h, and then the temperature is increased to 3000 °C by 10 °C/min and maintained for 4h; and for the carbonization treatment, the temperature is 1000 °C and the time period is 4h; the artificial graphite is screened and graded so that the Dv50 and $D_{FW}$ of the anode active material satisfy table 1; and the rolling conditions are adjusted so that the PD of the negative plate satisfies Table 1.

Comparative Example 2

Comparative Example 2 provides a lithium ion battery, the method for preparing which is substantially the same as that of Embodiment 1, except that:

in preparing the negative plate, the conditions for the graphitization treatment are as follows: the temperature is maintained at 2600 °C for 3h, and then the temperature is increased to 2800 °C by 15 °C/min and maintained for 3h; and for the carbonization treatment, the temperature is 930 °C and the time period is 4.5h; the artificial graphite is screened and graded so that the Dv50 and $D_{FW}$ of the anode active material satisfy table 1; and the rolling conditions are adjusted so that the PD of the negative plate satisfies Table 1.

Comparative Example 3

Comparative Example 3 provides a lithium ion battery, the method for preparing which is substantially the same as that of Embodiment 1, except that:

in preparing the negative plate, the conditions for the graphitization treatment are as follows: the temperature is maintained at 2640 °C for 2h, and then the temperature is increased to 2760 °C by 15 °C/min and maintained for 3.5h; and for the carbonization treatment, the temperature is 1150 °C and the time period is 4h; the artificial graphite is screened and graded so that the Dv50 and $D_{FW}$ of the anode active material satisfy table 1; and the rolling conditions are adjusted so that the PD of the negative plate satisfies Table 1.

The Dv50 and $D_{FW}$ of the anode active material, and La, PD, and $R_{ion}$ values of the negative plate prepared in Embodiments and Comparative Examples are shown in Table 1.

Table 1:

| | $D_{FW}$ (μm) | Dv50 (μm) | La (nm) | PD (g/cm$^3$) | a/45-b | $R_{ion}$ (Ω) | 5.5×b-ln(c) |
|---|---|---|---|---|---|---|---|
| Embodiment 1 | 25.1 | 12 | 70 | 1.68 | 0.05 | 0.438 | 10.07 |
| Embodiment 2 | 17.2 | 13.4 | 69.4 | 1.68 | 0.06 | 0.525 | 9.88 |
| Embodiment 3 | 15.5 | 14.9 | 65.1 | 1.65 | 0.08 | 0.623 | 9.55 |
| Embodiment 4 | 30 | 11.5 | 73 | 1.65 | 0.10 | 0.496 | 9.78 |
| Embodiment | 29.5 | 10.1 | 74.5 | 1.61 | 0.12 | 0.079 | 11.39 |

(continued)

|  | $D_{FW}$ (μm) | Dv50 (μm) | La (nm) | PD (g/cm$^3$) | a/45-b | $R_{ion}$ (Ω) | 5.5×b-ln(c) |
|---|---|---|---|---|---|---|---|
| 5 |  |  |  |  |  |  |  |
| Embodiment 6 | 21.6 | 13.2 | 70.2 | 1.6 | 0.15 | 0.229 | 10.27 |
| Embodiment 7 | 29.8 | 15 | 72.3 | 1.62 | 0.18 | 0.529 | 9.55 |
| Embodiment 8 | 34.7 | 8.2 | 73.7 | 1.6 | 0.08 | 0.244 | 10.21 |
| Embodiment 9 | 10.2 | 19.9 | 60.2 | 1.6 | 0.15 | 0.375 | 9.78 |
| Embodiment 10 | 28.2 | 16.1 | 80 | 1.72 | 0.15 | 0.862 | 9.61 |
| Embodiment 11 | 33 | 5.2 | 51.2 | 1.33 | 0.08 | 0.11 | 9.52 |
| Embodiment 12 | 28.5 | 18.5 | 74.4 | 1.8 | 0.06 | 0.963 | 9.94 |
| Embodiment 13 | 24.3 | 17.6 | 78 | 1.74 | 0.13 | 0.052 | 12.53 |
| Embodiment 14 | 25 | 18.2 | 77.1 | 1.75 | 0.13 | 0.66 | 10.04 |
| Embodiment 15 | 25.2 | 17.8 | 77.6 | 1.75 | 0.13 | 1.899 | 8.98 |
| Comparative Example 1 | 17.5 | 13.0 | 68.1 | 1.7 | 0.03 | 1.694 | 8.82 |
| Comparative Example 2 | 37 | 7.8 | 54.8 | 1.51 | 0.02 | 0.136 | 10.30 |
| Comparative Example 3 | 11.2 | 19.9 | 58.8 | 1.71 | 0.03 | 0.375 | 10.39 |

The surface states of the negative plates prepared in the Embodiments and Comparative Examples are observed, the contact angles of the negative plates are measured, and the cycle lives of the lithium ion batteries prepared in the Embodiments and Comparative Examples are measured, and the results are shown in Table 2.

Table 2:

|  | surface state | contact angle (°) | cycle life |
|---|---|---|---|
| Embodiment 1 | good surface | 62.7 | 3765 |
| Embodiment 2 | good surface | 61.6 | 3790 |
| Embodiment 3 | good surface | 60.1 | 3850 |
| Embodiment 4 | good surface | 56.3 | 4015 |
| Embodiment 5 | good surface | 51.9 | 4120 |
| Embodiment 6 | good surface | 50.4 | 4160 |
| Embodiment 7 | good surface | 49.9 | 4195 |
| Embodiment 8 | good surface | 60.7 | 3815 |
| Embodiment 9 | good surface | 50.8 | 4135 |
| Embodiment 10 | good surface | 51.5 | 4120 |
| Embodiment 11 | good surface | 61.4 | 3800 |
| Embodiment 12 | good surface | 62.3 | 3775 |
| Embodiment 13 | good surface | 46.9 | 3980 |
| Embodiment 14 | good surface | 53.2 | 4050 |
| Embodiment 15 | good surface | 57.0 | 3875 |
| Comparative Example 1 | edge overpressure | 71.5 | 3010 |
| Comparative Example 2 | severe overpressure | 88.2 | 2490 |
| Comparative Example 3 | edge overpressure | 74.4 | 2840 |

From combination of the test results in Tables 1 and 2, it can be seen that when the negative plates meet the requirements of a/45-b≥0.05, they all have a lower wetting angle, indicating that the negative plates maintain good wetting performance at a low temperature and have a higher cycle life; however, when the value of a/45-b of the negative plate is less than 0.05, the wettability of the material is deteriorated, and the cycle life is also decreased, and after the negative plates prepared in Comparative Examples 1-3 are subjected to rolling, the surfaces of the negative plates show various degrees of overpressure.

According to Embodiments 1 to 7, the values of a/45-b are higher, and the wetting angles of the negative plates tend to decrease, indicating that the wetting performance of the plates is better. However, the value of a/45-b should not be too high, which may cause a decrease in the energy density of the battery (for example, when the value of a/45-b of the negative plate is 0.2, the energy density of the battery decreases by about 5% compared to Embodiment 1), or the charge/discharge rate of the battery is impaired.

According to Embodiments 8-12, when the Dv50 and $D_{FW}$ of the anode active material or the La and PD of the negative plate are in a non-preferred range, the wetting angle and the cycle life of the negative plate are deteriorated to some extent.

According to Embodiments 13 to 15, it can be seen that in the case where the values of a/45-b of the negative plates are close or the same, the lower the ion transport impedance (c value), the contact performance of the negative plates is relatively better, and when the negative plate satisfies a 5.5×b-ln(c) of 9.5-11.5, the negative plate has excellent wetting performance and excellent cycle life of the battery is also ensured.

**Claims**

1. A negative plate, including a negative current collector and an anode active material layer provided on at least one surface of the negative current collector, the anode active material layer including an anode active material, **characterized in that** the anode active material includes graphite, and the negative plate satisfies the following relationship:

$$a=\ln(D_{FW})+10\times\ln(D_V50)+1/3(La)+26.5, \quad b=PD, \quad a/45\text{-}b\geq0.05,$$

   where $D_{FW}$ is a full width at half maximum of a particle size volume distribution of the anode active material in a unit of $\mu$m,

   Dv50 is a particle diameter corresponding to 50% of a cumulative volume distribution percentage of the anode active material in a unit of $\mu$m,
   La is an average size of a crystal in an a-axis direction measured by Raman spectroscopy on the negative plate in a unit of nm, and
   PD is a compacted density of the negative plate in a unit of g/cm$^3$.

2. The negative plate according to claim 1, **characterized in that** the negative plate satisfies the following relationship: 0.06≤a/45-b≤0.15.

3. The negative plate according to claim 1, **characterized in that** the $D_{FW}$ is in a range of 10 $\mu$m to 35 $\mu$m.

4. The negative plate according to claim 3, **characterized in that** the $D_{FW}$ is in a range of 15 $\mu$m to 30 $\mu$m.

5. The negative plate according to claim 1, **characterized in that** the Dv50 is in a range of 5 $\mu$m to 20 $\mu$m.

6. The negative plate according to claim 5, **characterized in that** the Dv50 is in a range of 10 $\mu$m to 15 $\mu$m.

7. The negative plate according to claim 1, **characterized in that** the La is in a range of 50 nm to 80 nm.

8. The negative plate according to claim 7, **characterized in that** the La is in a range of 65 nm to 75 nm.

9. The negative plate according to claim 1, **characterized in that** the PD is in a range of 1.3 g/cm$^3$ to 1.8 g/cm$^3$.

10. The negative plate according to claim 9, **characterized in that** the PD is in a range of 1.60 g/cm$^3$ to 1.75 g/cm$^3$.

**11.** The negative plate according to claim 1, **characterized in that** the negative plate further satisfies the following relationship: $9.5 \leq 5.5 \times b\text{-ln}(c) \leq 11.5$,
where c is an ion transport impedance of the negative plate in a unit of ohms ($\Omega$).

**12.** The negative plate according to claim 11, **characterized in that** the c is in a range of 0.05 Q to 2 Q.

**13.** The negative plate according to claim 12, **characterized in that** the c is in a range of 0.1 S2 to 1.0 Q.

**14.** A secondary battery, including a positive plate, a negative plate and an electrolyte solution, **characterized in that** the negative plate is the negative plate according to any one of claims 1 to 13.

**15.** An electrical device, **characterized by** comprising the secondary battery according to claim 14.

Europäisches
Patentamt

European
Patent Office

Office européen
des brevets

# EUROPEAN SEARCH REPORT

Application Number

EP 24 17 9512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/108983 A1 (CONTEMPORARY AMPEREX TECHNOLOGY CO LTD [CN]) 10 June 2021 (2021-06-10) * (p. 17 f): example 1 * | 1-15 | INV. H01M4/133 H01M4/1393 ADD. H01M4/02 |
| X | US 8 747 800 B2 (SUDOH AKINORI [JP]; TAKEUCHI MASATAKA [JP]; SHOW A DENKO K K [JP]) 10 June 2014 (2014-06-10) * (c. 18f): example 1 * | 1-15 | |
| X | US 2023/117662 A1 (LI ERLING [CN] ET AL) 20 April 2023 (2023-04-20) * ([0226]ff): "(I) Preparation of Artificial Graphite A" * | 1-15 | |
| X | WO 2021/108982 A1 (CONTEMPORARY AMPEREX TECHNOLOGY CO LTD [CN]) 10 June 2021 (2021-06-10) * (p. 18): example 1 * | 1-15 | |

TECHNICAL FIELDS SEARCHED (IPC)

H01M

The present search report has been drawn up for all claims

| Place of search | Date of completion of the search | Examiner |
|---|---|---|
| Munich | 6 November 2024 | Radeck, Stephanie |

EPO FORM 1503 03.82 (P04C01)

## ANNEX TO THE EUROPEAN SEARCH REPORT
## ON EUROPEAN PATENT APPLICATION NO.

EP 24 17 9512

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2024

| Patent document cited in search report | | Publication date | Patent family member(s) | | Publication date |
|---|---|---|---|---|---|
| WO 2021108983 | A1 | 10-06-2021 | CN | 113207314 A | 03-08-2021 |
| | | | EP | 3879601 A1 | 15-09-2021 |
| | | | EP | 4456176 A1 | 30-10-2024 |
| | | | JP | 2022550187 A | 30-11-2022 |
| | | | KR | 20220064387 A | 18-05-2022 |
| | | | US | 2021313575 A1 | 07-10-2021 |
| | | | WO | 2021108983 A1 | 10-06-2021 |
| US 8747800 | B2 | 10-06-2014 | CN | 102070138 A | 25-05-2011 |
| | | | CN | 102583341 A | 18-07-2012 |
| | | | EP | 1961700 A1 | 27-08-2008 |
| | | | KR | 20080073706 A | 11-08-2008 |
| | | | KR | 20130085450 A | 29-07-2013 |
| | | | US | 2009242849 A1 | 01-10-2009 |
| | | | US | 2010221543 A1 | 02-09-2010 |
| | | | WO | 2007066673 A1 | 14-06-2007 |
| US 2023117662 | A1 | 20-04-2023 | CN | 114747042 A | 12-07-2022 |
| | | | EP | 4138154 A1 | 22-02-2023 |
| | | | JP | 7523559 B2 | 26-07-2024 |
| | | | JP | 2023515496 A | 13-04-2023 |
| | | | KR | 20220124781 A | 14-09-2022 |
| | | | US | 2023117662 A1 | 20-04-2023 |
| | | | WO | 2022077370 A1 | 21-04-2022 |
| WO 2021108982 | A1 | 10-06-2021 | CN | 113207316 A | 03-08-2021 |
| | | | EP | 3923387 A1 | 15-12-2021 |
| | | | JP | 7406625 B2 | 27-12-2023 |
| | | | JP | 2022545912 A | 01-11-2022 |
| | | | KR | 20220041903 A | 01-04-2022 |
| | | | US | 2021399301 A1 | 23-12-2021 |
| | | | WO | 2021108982 A1 | 10-06-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OGIHARA N ; KAWAUCHI S ; OKUDA C et al.** Theoretical and experimental analysis of porous electrodes for lithium-ion batteries by electrochemical impedance spectroscopy using a symmetric cell. *Journal of The Electrochemical Society,* 2012, vol. 159 (7), A1034